# EUROPEAN PATENT APPLICATION

(11) **EP 4 597 754 A1**
(43) Date of publication of application: **06.08.2025**
(21) Application number: 24154768.6
(22) Date of filing: 30.01.2024
(51) Int. Cl.: H01R 4/38, H01R 9/05, H01R 11/09

(54) **CONNECTOR FOR POWER CABLE**

(71) Applicant: NKT HV Cables AB, 371 60 Lyckeby (SE)
(72) Inventor: ZETTERVALL, Björn, Nättraby (SE)
(74) Representative: Kransell & Wennborg KB

(57) **Abstract**

Connector for connecting conductor end portions of stranded conductors of two power cables sections, each stranded conductor comprising a plurality of wire layers, each conductor end portion being arranged tapering in an axial direction towards a tip of the respective stranded conductor in steps, wire layer by wire layer. The connector comprising: a plurality of sleeves (4c) configured to be arranged concentrically, wherein each sleeve comprises a first sleeve part provided with radially outwards extending first flanges and a second sleeve part provided with radially outwards extending second flanges, wherein when the first sleeve part and the second sleeve part of the same sleeve are assembled with each other, each first flange is configured to face a respective second flange, a plurality of fasteners, wherein each pair of first sleeve part and second sleeve part is configured to be arranged around and clamp a respective correspondingly sized step of both conductor end portions by means of a respective subset of the fasteners arranged to connect the first flanges and the second flanges, and resilient members configured to be arranged between the first flanges and second flanges of the sleeves to provide elasticity between each pair of first sleeve part and second sleeve part, wherein each intermediate sleeve and the outermost sleeve has axial slots configured to receive the first flanges and second flanges of at least a next size smaller sleeve of the plurality of sleeves.

## Description

### TECHNICAL FIELD

The present disclosure generally relates to connectors for power cables.

### BACKGROUND

Power cables of longer length need often to be jointed. Jointing involves connecting the conductor of the two power cables that are joined. This is often done using a ferrule or connector placed around the two conductor end sections.

In some cases, the conductor may be a stranded conductor, i.e., non-solid, made of a plurality of strands or elongated elements, in which case all the layers should be arranged in mechanical contact with the ferrule. The conductor end sections are therefore arranged in a stepped manner, tapering towards each other.

One challenge with traditional ferrule designs is that since the conductor is subjected to fluctuating temperatures depending on the current flowing through it, the ferrule becomes plasticized in a thermally expanded state, which can lead to reduced mechanical contact between the ferrule and the conductor.

### SUMMARY

A general object of the present disclosure is to provide a connector that solves or at least mitigates the problems of the prior art.

There is hence provided a connector for connecting conductor end portions of stranded conductors of two power cables sections, each stranded conductor comprising a plurality of wire layers, each conductor end portion being arranged tapering in an axial direction towards a tip of the respective stranded conductor in steps, wire layer by wire layer, the connector comprising: a plurality of sleeves configured to be arranged concentrically, wherein a smallest one of the sleeves is an innermost sleeve, some of the sleeves are intermediate sleeves configured to be arranged one after the other radially outside the innermost sleeve in an order of increasing diameter and axial length, and a largest one of the sleeves is an outermost sleeve configured to be arranged radially outside all the intermediate sleeves, wherein each sleeve comprises a first sleeve part provided with radially outwards extending first flanges and a second sleeve part provided with radially outwards extending second flanges, wherein when the first sleeve part and the second sleeve part of the same sleeve are assembled with each other, each first flange is configured to face a respective second flange, a plurality of fasteners, wherein each pair of first sleeve part and second sleeve part is configured to be arranged around and clamp a respective correspondingly sized step of both conductor end portions by means of a respective subset of the fasteners arranged to connect the first flanges and the second flanges, and resilient members configured to be arranged between the first flanges and second flanges of the sleeves to provide elasticity between each pair of first sleeve part and second sleeve part, wherein each intermediate sleeve and the outermost sleeve has axial slots configured to receive the first flanges and second flanges of at least a next size smaller sleeve of the plurality of sleeves.

The sleeves clamp the steps individually, and the resilient members provide individual biasing of the sleeve of each step, ensuring that all the sleeves are in good contact with the respective step during thermal expansion and contraction cycles, and also if the stranded conductors are plastisicised as a result of thermal expansion. Overheating due to detoriated contact between the stranded conductors and the sleeves may thus be avoided.

According to one embodiment an axial length of the axial slots increases with every sleeve from the innermost intermediate sleeve to the outermost sleeve.

According to one embodiment in a mounted state of the connector all the axial slots are aligned with each other.

According to one embodiment for each intermediate sleeve and the outermost sleeve the first flanges and the second flanges are arranged at ends of the axial slots.

According to one embodiment for each sleeve the flanges form axial ends of the sleeve.

According to one embodiment the fasteners comprise bolts.

According to one embodiment the resilient members are washers.

According to one embodiment the washers are spring washers.

One embodiment comprises an outer cover comprising a first cover part and a second cover part, configured to arranged around the outermost sleeve.

One embodiment comprises additional fasteners, wherein the first cover part and the second cover part are configured to be attached to each other by means of the additional fasteners.

One embodiment comprises additional resilient members, wherein the additional resilient members are configured to be arranged between the first cover part and the second cover part to provide elasticity between the first cover part and the second cover part.

There is according to a second aspect of the present disclosure provided a power cable comprising: a first power cable section comprising a first stranded conductor having a first conductor end portion, a second power cable section comprising a second stranded conductor having a second conductor end portion, each stranded conductor comprising a plurality of wire layers, each conductor end portion being arranged in steps, wire layer by wire layer, tapering in an axial direction towards a tip of the respective stranded conductor, and the connector of the first aspect, wherein the connector is arranged around the conductor end portions, clamping the steps and thereby connecting the two stranded conductors.

According to one embodiment the power cable comprises an insulation system extending axially to both axial ends of the connector, wherein the outer cover has an outer diameter which is the same or essentially the same as the outer diameter of the insulation system.

According to one embodiment the power cable is a DC power cable.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a portion of a power cable including an example of a connector;
Fig. 2 shows the power cable without the connector with two conductors facing each other, arranged in a stepped manner;
Fig. 3 is a perspective view of an example of a sleeve
Fig. 4 is a perspective view showing a first/second sleeve part of the sleeve in Fig. 3;
Figs 5-8 shows different levels of the connector, with sleeves connected to the two conductors; and
Fig. 9 shows the connector arranged around the two conductors with half of an outer cover removed to expose the internal structure of the connector in a completed state.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

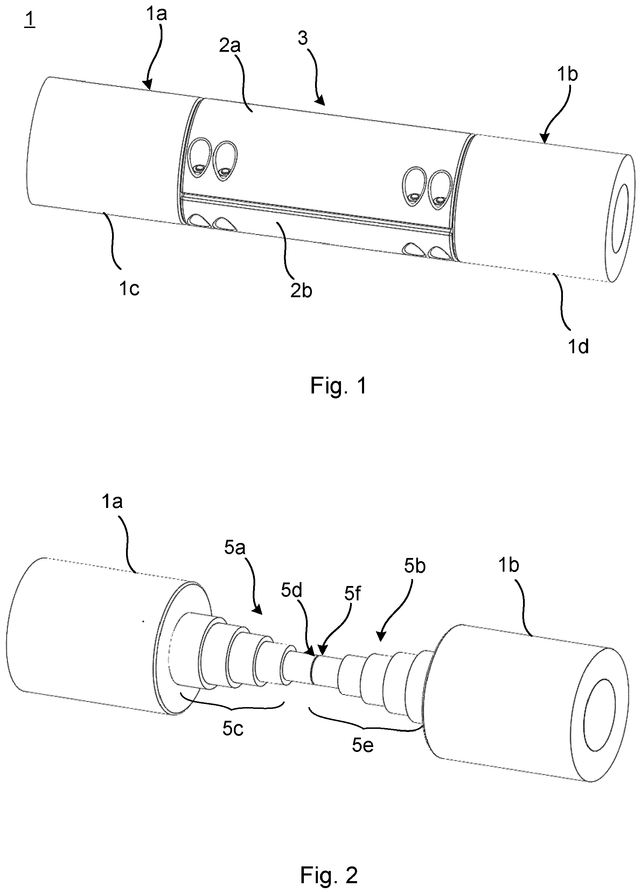

Fig. 1 schematically shows a portion of a power cable 1 including a first power cable section 1a and a second power cable section 1b.

The power cable 1 is preferably a DC power cable but could alternatively be an AC power cable.

The first power cable section 1a comprises a first insulation system 1c and the second power cable section 1b comprises a second insulation system 1d. The first insulation system 1c and the second insulation system 1d form part of the insulation system of the power cable 1.

The power cable 1 also comprises a connector 3. The connector 3 may comprise or consist of metal, such as aluminium, an aluminium alloy, copper, a copper alloy, or steel.

The first power cable section 1a and the second power cable section 1b are electrically joined by means of the connector 3.

Fig. 2 shows the first power cable section 1a and the second power cable section 1b without the connector 3.

The first power cable section 1a comprises a first stranded conductor 5a comprising a plurality of wire layers. The second power cable section 1b comprises a second stranded conductor 5b comprising a plurality of wire layers.

A "wire" as to be understood herein may have a circular or essentially circular cross-section, a trapezoidal cross-section, or any other cross-sectional shape suitable for stranded conductors. A "wire" is thus to be understood to be an elongated element. The first and the second stranded conductors 5a, 5b may typically be stranded round conductors or profile wire conductors but could also be segmental or Milliken conductors, for example.

The first stranded conductor 5a has a conductor end portion 5c that is arranged tapering in steps, wire layer by wire layer, in an axial direction towards the tip 5d of the first stranded conductor 5a. According to one example, if the first stranded conductor 5a has N layers of wires, then the conductor end portion 5c has exactly N steps.

The second stranded conductor 5b has a conductor end portion 5e that is arranged tapering in steps, wire layer by wire layer, an axial direction towards the tip 5f of the second stranded conductor 5b. According to one example, if the second stranded conductor 5b has N layers of wires, then the conductor end portion 5e has exactly N steps.

Each "step" as to be understood herein is a section of the respective stranded conductor 5a, 5b which has an outer surface that is parallel with the longitudinal axis of the power cable 1. Each step has a length defined by the distance between two subsequent radial surfaces, intersecting the longitudinal axis, which changes the diameter of the conductor end section 5c, 5e, except for the outermost step of each conductor end section 5c, 5e, which has a length defined by a radial surface closest to the respective insulation system 1c, 1d and the respective insulation system 1c, 1d.

The tips 5d and 5f of the first stranded conductor 5a and the second stranded conductor, respectively, are facing each other. The tips 5d and 5f may be in direct physical contact with each other or they may be spaced apart.

The first insulation system 1c is arranged around the first stranded conductor 5a up until the conductor end portion 5c, from which the first insulation system 1c has been removed.

The second insulation system 1d is arranged around the second stranded conductor 5b up until the conductor end portion 5e, from which the second insulation system 1d has been removed.

The connector 3 is arranged around and is mechanically connected with the two conductor end portions 5c and 5e. The connector 3 is in mechanical contact with each step of the two conductor end portions 5c and 5e.

The connector 3 comprises an outer cover, which forms the outermost surface of the connector 3. The outer cover comprises a first cover part 2a and a second cover part 2b.

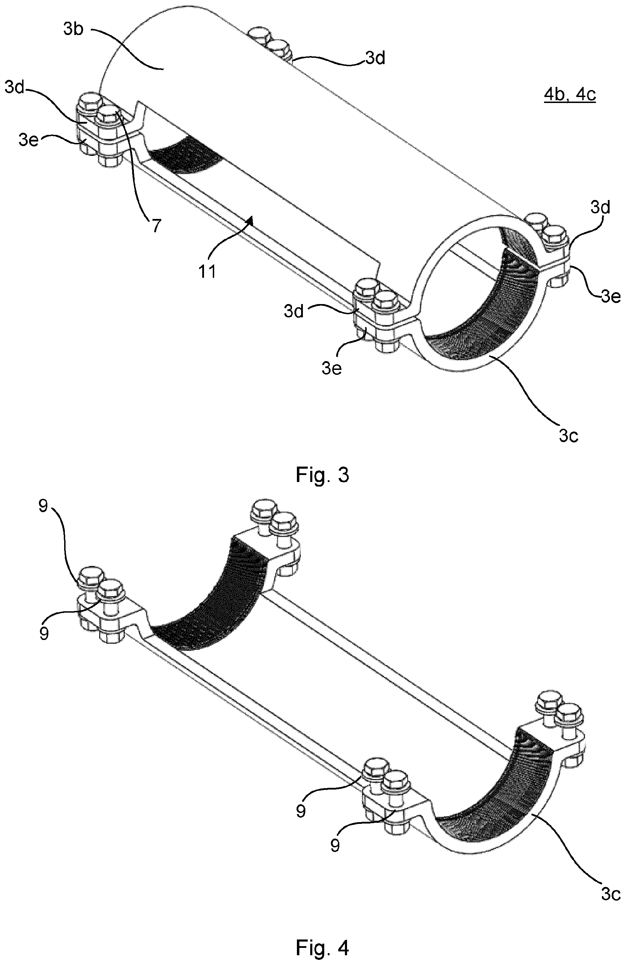

The connector 3 comprises a plurality of sleeves, of which an example is shown in Fig. 3. Each sleeve has a different diameter and a different axial length. The sleeves include an innermost sleeve, which is the axially shortest and has the smallest diameter of all the sleeves, a plurality of intermediate sleeves 4b configured to be arranged one after the other in a concentric manner, in an order of increasing diameter and axial length, and an outermost sleeve 4c arranged outside all the intermediate sleeves. The intermediate sleeves 4b and the outermost sleeve 4c have the same structure while the innermost sleeve may be slightly different from the other sleeves, as will be explained herein. The sleeve 4a, 4b shown in Fig. 3 is an intermediate sleeve or the outermost sleeve.

Each sleeve, including the innermost sleeve, is dimensioned to be arranged with a tight fit around the respective same step of both conductor end portions 5c and 5e. Each sleeve may have an axial length equal to or being essentially equal to the axial length of the distance between the outer ends, seen from the tips 5d, 5f, of the two steps of the same size that it is to connect with.

In more detail, the sleeve 4b, 4c shown in Fig. 3 comprises a first sleeve part 3b and a second sleeve part 3c. The first sleeve part 3b and the second sleeve part 3c are arranged to be assembled with each other facing each other along their axial extension. The first sleeve part 3b may be a first sleeve half and the second sleeve part 3c may be a second sleeve half.

The sleeve 4a, 4ba has first flanges 3d and second flanges 3e. According to the example, each sleeve part 3b and 3c of the intermediate sleeves 4b and the outermost sleeve 4c comprises four flanges. The first flanges 3d of the first sleeve part 3b comprises the first flanges 3d and the second sleeve part 3c comprises the second flanges 3e. The first flanges 3d of the first sleeve part 3b are arranged facing the corresponding second flanges 3r of the second sleeve part 3c.

The connector 3 comprises a plurality of fasteners 7. The fasteners 7 may for example comprise bolts and nuts, or screws.

The first flanges 3d and the second flanges 3e comprise through-openings arranged to receive the fasteners 7. The fasteners 7 attach the first sleeve part 3b to the second sleeve part 3c of each sleeve 3. The first sleeve part 3b and the second sleeve part 3c thereby clamp the corresponding step of the two conductor end portions 5c and 5e.

Further, as shown in Fig. 4, the connector 3 comprises resilient members 9 configured to provide a biasing force between the first sleeve part 3b and the second sleeve part 3c. The resilient members 9 may for example be washers, such as spring washers.

Each resilient member 9 is arranged around a respective fastener 7. The resilient members 9 are arranged to provide elasticity or resilience between the first sleeve part 3b and the second sleeve part 3c to ensure contact between the sleeves 4b, 4c and the respective steps of the conductor end portions 5c and 5e.

The description of the sleeve 4b, 4c in Figs 3-4 up to this point also applies to the innermost sleeve, except that the innermost sleeve only comprises two first flanges and two second flanges.

Another difference between the innermost sleeve, and the intermediate and outermost sleeves 4b, 4c, respectively, is that the intermediate sleeves 4b and the outermost sleeve 4c each comprises an axial slot 11 at two opposing sides of the sleeve 3a, shown in Fig. 3. The axial slots 11 extend axially between facing pairs of first flanges 3d and second flanges 3e. The first flanges 3d and the second flanges 3e are arranged at axial ends or axial end portions of the respective sleeve 4b, 4c and the axial slots 11 extend therebetween.

Since the first and second flanges 3d and 3e of each sleeve protrudes radially, the axial slots 11 are arranged to receive corresponding radially outwards extending first and second flanges 3d and 3e of underlying sleeves to be able to mount the sleeves concentrically close enough so that each sleeve 4b, 4c clamps a respective step.

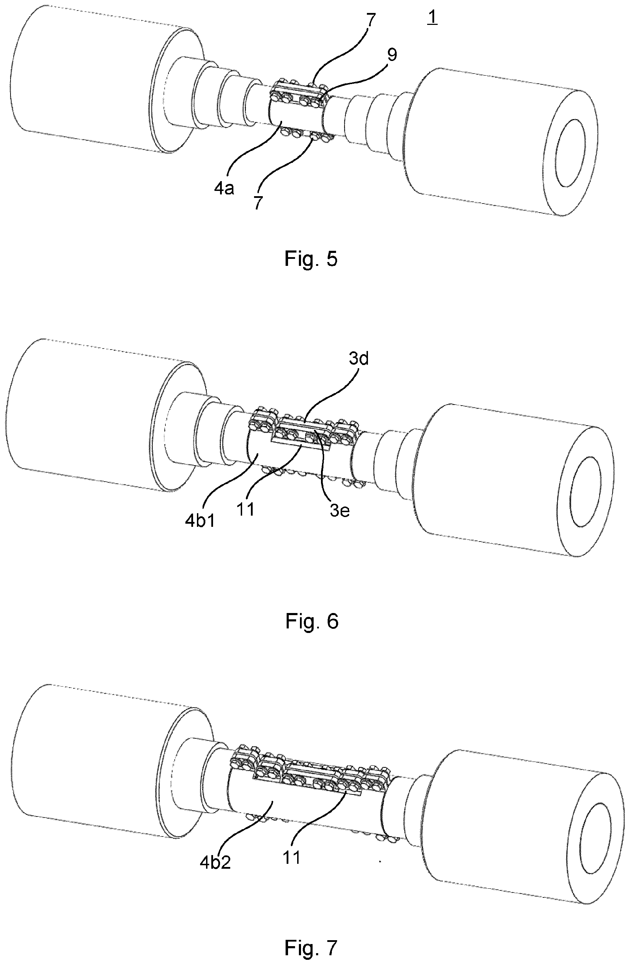

Fig. 5 shows the power cable 1 with the innermost sleeve 4a mounted around the innermost step of the two conductor end portions 5c and 5e. The exemplified innermost sleeve 4a has no axial slots. The first flanges and second flanges face each other and are connected by means of fasteners 7, with resilient members 9 being present to provide elasticity between the first and second sleeve parts of the innermost sleeve 4a. The innermost sleeve 4a is the first sleeve to be mounted to the conductor end portions 5c and 5e when assembling the connector 3.

Fig. 6 shows the connector 3 in a state when a second sleeve has been mounted around the conductor end portions 5c and 5e. The second sleeve is a first intermediate sleeve 4b1, which is mounted directly outside the innermost sleeve 4a. The axial slots 11 of the first intermediate sleeve 4b1 receive the first flanges 3d and second flanges 3e, and fasteners 7, of the innermost sleeve 4a.

Fig, 7 depicts the connector 3 in a state when a third sleeve has been mounted around the conductor end portions 5c and 5e. The third sleeve is a second intermediate sleeve 4b2, which is mounted directly outside the first intermediate sleeve 4b1. The axial slots 11 of the second intermediate sleeve 4b2 receive the first flanges 3d and the second flanges 3e of the innermost sleeve 4a, and the first and second flanges of the first intermediate sleeve 4b1. First and second flanges of the second intermediate sleeve 4b2 are arranged laterally at both axial sides of the first flanges 3d of the innermost sleeve 4a, and first and second flanges of the first intermediate sleeve 4b1.

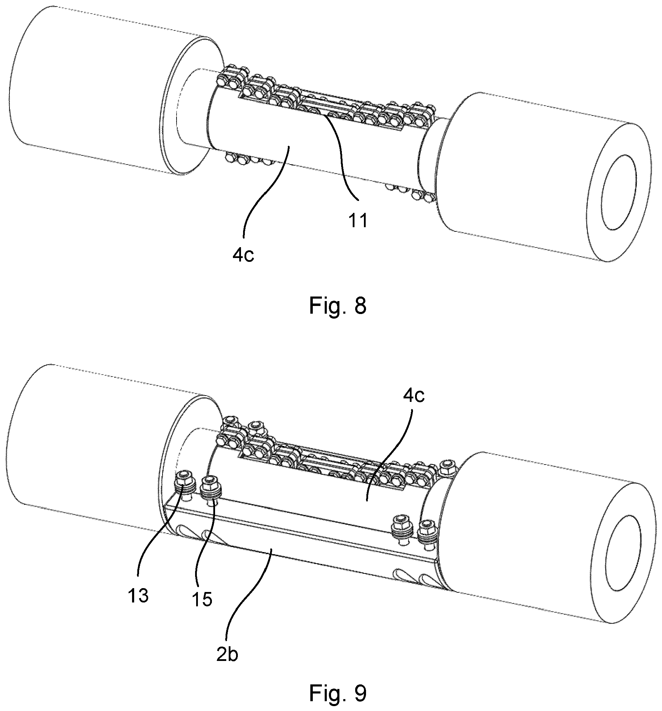

Fig. 8 depicts the connector 3 in a state when a fourth sleeve has been mounted around the conductor end portions 5c and 5e. The fourth sleeve is a in this example the outermost sleeve 4c, which is mounted directly outside the second intermediate sleeve 4b2. The axial slots 11 of the outermost sleeve 4c receive the first flanges 3d and the second flanges 3e of the innermost sleeve 4a, first and second flanges of the first intermediate sleeve 4b1, and first and second flanges of the second intermediate sleeve 4b2. First and second flanges of the outermost sleeve 4c are arranged laterally at both axial sides of the first flanges 3d of the innermost sleeve 4a, first and second flanges of the first intermediate sleeve 4b1, and first and second flanges of the second intermediate sleeve 4b2.

As can be understood, the axial slots 11 become successively longer in the axial direction for each sleeve as their diameter and length increases. The axial slots 11 of different sleeves 4a, 4b1-4c are aligned with each other. Moreover, the first and second flanges are as a result arranged axially further and further away from each other, at ends of the axial slots 11.

Turning now to Fig. 9, the connector 3 has now been assembled up to the outer cover. In the figure, one of the outer cover parts has been removed to expose the interior of the connector 3. The outer cover is arranged around the outermost sleeve 4c. The first cover part 2a and the second cover part 2b may be arranged radially in level, or essentially in level, with the outer surface of the electrical insulation or outer semiconducting layer of the power cable 1.

The outer cover is arranged to clamp the outermost step of the two conductor end portions 5c, 5e. Thus, if the first stranded conductor 5a and the second stranded conductor 5b each has N steps, then the connector 3 comprises one innermost sleeve 4a, in total N-2 intermeditate and outermost sleeves 4b, 4b1, 4b2, 4c, and one outer cover, which individually clamp a respective step of the N steps of each conductor end portion 5c, 5e.

The first outer cover 2a and the second outer cover 2b may be two halves configured to be arranged around the outermost sleeve 4c.

The connector 3 further comprises additional fasteners 13 which are configured to attach the first outer cover 2a to the second outer cover 2b. The additional fasteners 13 may for example comprise bolts and nuts, or screws. Further, the connector 3 comprises additional resilient members 15 configured to be arranged between the first cover part 2a and the second cover 2b part to provide elasticity between the first cover part 2a and the second cover part 2b for clamping the outermost steps.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Connector (3) for connecting conductor end portions (5c, 5e) of stranded conductors (5a, 5b) of two power cables sections (1a, 1b), each stranded conductor (5a, 5b) comprising a plurality of wire layers, each conductor end portion (5c, 5e) being arranged tapering in an axial direction towards a tip (5d, 5f) of the respective stranded conductor (5a, 5b) in steps, wire layer by wire layer, the connector (3) comprising:
- a plurality of sleeves (4a, 4b, 4b1, 4b2, 4c) configured to be arranged concentrically, wherein a smallest one of the sleeves is an innermost sleeve (4a), some of the sleeves are intermediate sleeves (4b, 4b1, 4b2) configured to be arranged one after the other radially outside the innermost sleeve (4a) in an order of increasing diameter and axial length, and a largest one of the sleeves is an outermost sleeve (4c) configured to be arranged radially outside all the intermediate sleeves (4b, 4b1, 4b2),
wherein each sleeve comprises a first sleeve part (3b) provided with radially outwards extending first flanges (3d) and a second sleeve part (3c) provided with radially outwards extending second flanges (3e), wherein when the first sleeve part (3b) and the second sleeve part (3c) of the same sleeve are assembled with each other, each first flange (3d) is configured to face a respective second flange (3e),
- a plurality of fasteners (7),
wherein each pair of first sleeve part (3b) and second sleeve part (3c) is configured to be arranged around and clamp a respective correspondingly sized step of both conductor end portions (5c, 5e) by means of a respective subset of the fasteners (7) arranged to connect the first flanges (3d) and the second flanges (3e), and
- resilient members (9) configured to be arranged between the first flanges (3d) and second flanges (3e) of the sleeves to provide elasticity between each pair of first sleeve part (3d) and second sleeve part (3e),
wherein each intermediate sleeve (4b, 4b1, 4b2) and the outermost sleeve (4c) has axial slots (11) configured to receive the first flanges (3d) and second flanges (3e) of at least a next size smaller sleeve (4a, 4b, 4b1, 4b2) of the plurality of sleeves.

2. Connector (3) as claimed in claim 1, wherein an axial length of the axial slots (11) increases with every sleeve (4b, 4b1, 4b2, 4c) from the innermost intermediate sleeve (4b1) to the outermost sleeve (4c).

3. Connector (3) as claimed in claim 1 or 2, wherein in a mounted state of the connector (3) all the axial slots (11) are aligned with each other.

4. Connector (3) as claimed in any of the preceding claims, wherein for each intermediate sleeve (4b, 4b1, 4b2) and the outermost sleeve (4c) the first flanges (3d) and the second flanges (3e) are arranged at ends of the axial slots (11).

5. Connector (3) as claimed in any of the preceding claims, wherein for each sleeve (4a, 4b, 4b1, 4b2, 4c) the flanges (3d, 3e) form axial ends of the sleeve (4a, 4b, 4b1, 4b2, 4c).

6. Connector (3) as claimed in any of the preceding claims, wherein the fasteners (7) comprise bolts.

7. Connector (3) as claimed in any of the preceding claims, wherein the resilient members (9) are washers.

8. Connector a(3) s claimed in claim 7, wherein the washers are spring washers.

9. Connector (3) as claimed in any of the preceding claims, comprising an outer cover comprising a first cover part (2a) and a second cover part (2b), configured to arranged around the outermost sleeve (4c).

10. Connector (3) as claimed in claim 9, comprising additional fasteners (13), wherein the first cover part (2a) and the second cover part (2b) are configured to be attached to each other by means of the additional fasteners (13).

11. Connector (3) as claimed in claim 10, comprising additional resilient members (15), wherein the additional resilient members (15) are configured to be arranged between the first cover part (2a) and the second cover part (2b) to provide elasticity between the first cover part (2a) and the second cover part (2b).

12. Power cable (1) comprising:
a first power cable section (1a) comprising a first stranded conductor (5a) having a first conductor end portion (5c),
a second power cable section (1b) comprising a second stranded conductor (5b) having a second conductor end portion (5e),
each stranded conductor (5a, 5b) comprising a plurality of wire layers, each conductor end portion (5c, 5e) being arranged in steps, wire layer by wire layer, tapering in an axial direction towards a tip (5d, 5f) of the respective stranded conductor (5a, 5b), and
the connector (3) as claimed in any of the preceding claims, wherein the connector (3) is arranged around the conductor end portions (5c, 5e), clamping the steps and thereby connecting the two stranded conductors (5a, 5b).

13. Power cable (1) as claimed in claim 12, wherein the connector (3) is as claimed in any of claims 9-11, wherein the power cable (1) comprises an insulation system (1c, 1d) extending axially to both axial ends of the connector (3), wherein the outer cover has an outer diameter which is the same or essentially the same as the outer diameter of the insulation system.

14. Power cable (1) as claimed in claim 12 or 13, wherein the power cable (1) is a DC power cable.
